# EUROPÄISCHE PATENTSCHRIFT

(11) **EP 4 241 965 B1**
(45) Veröffentlichungstag und Bekanntmachung des Hinweises auf die Patenterteilung: **11.12.2024**
(21) Anmeldenummer: 22160815.1
(22) Anmeldetag: 08.03.2022
(51) Int. Cl.: B29C 64/40, B33Y 10/00, B33Y 80/00, A61C 13/00, A61C 5/77

(54) **HERSTELLUNGSVERFAHREN FÜR EIN DENTALOBJEKT**
METHOD FOR MANUFACTURING A DENTAL OBJECT
PROCÉDÉ DE FABRICATION D'UN OBJET DENTAIRE

(43) Veröffentlichungstag der Anmeldung: 13.09.2023
(73) Patentinhaber: Ivoclar Vivadent AG, 9494 Schaan (LI)
(72) Erfinder: EBERT, Jörg, 9470 Buchs (CH)
(74) Vertreter: Baldus, Oliver

(56) Entgegenhaltungen:
- WO-A1-2019/239296
- CN-A- 112 706 407
- DE-A1- 102015 011 110
- US-A1- 2019 263 070

## Beschreibung

Die vorliegende Erfindung betrifft ein Herstellungsverfahren für ein Dentalobjekt und eine dendritische Basisstruktur zum Aufbauen eines Dentalobjekts durch ein dreidimensionales Druckverfahren.

In dreidimensionalen Druckprozessen muss das zu herzustellende Objekt mit dem Drucker in geeigneter Weise verbunden werden. In der Regel findet diese Verbindung an einer Bauplattform des Druckers statt. Die Haftung an der Schnittstelle zwischen der Bauplattform und dem Objekt stellt im weiteren Druckprozess die Positionstreue des Objektes innerhalb des Bauraumes sicher.

In der Stereolithografie gibt es allerdings Verfahren, bei denen das Objekt bei der Herstellung Kräften ausgesetzt wird, die sich auch auf die Schnittstelle zwischen Bauplattform und Objekt übertragen. Für einen schnellen und sicheren Prozesses sind diese Kräfte so gering wie möglich zu halten. Gegenwärtige Basisstrukturen sind nachteilig, um die Haftung des Objekts an einer Bauplattform im Hinblick auf die fluid-spezifischen Prozesskräfte sicherzustellen. Eine polymerisierte Fläche einer Basisstruktur stellt gleichzeitig eine haftvermittelnde Fläche aber auch eine Barriere für den freien Materialfluss dar. Dokument US 2019/263070 A1 offenbart ein 3D-Druckverfahren eines Dentalobjekts auf einer Gitterstruktur.

Es ist die technische Aufgabe der Erfindung, eine effiziente Übertragung von Kräften von einem Dentalobjekt auf eine Bauplattform eines Druckers sicherzustellen und eine effiziente Entfernung von unausgehärtetem Herstellungsmaterial zu ermöglichen.

Diese technische Aufgabe wird durch Gegenstände nach den unabhängigen Ansprüchen 1 und 13 gelöst. Technisch vorteilhafte Ausführungsformen der Erfindung sind Gegenstand der abhängigen Ansprüche.

Gemäß einem ersten Aspekt wird die technische Aufgabe durch ein Herstellungsverfahren für ein Dentalobjekt gelöst, mit den Schritten eines Erzeugens einer dendritischen Basisstruktur auf einer Bauplattform; und eines Aufbauens des Dentalobjekts auf der dendritischen Basisstruktur durch ein dreidimensionales Druckverfahren. Durch die dendritische Basisstruktur wird der technische Vorteil erreicht, dass Kräfte effizient von dem Dentalobjekt auf die Bauplattform übertragen werden können und eine Beschädigung der darauf aufgebauten Strukturen verhindert wird. Die dendritische Basisstruktur stellt eine Verbindung zwischen Bauplattform und weiteren Unterstützungsstrukturen sicher, während eine gute Haftung, ein guter Materialfluss und geringe Prozesskräfte erreicht werden. Nach einem teilweisen Aushärten des Herstellungsmaterials befindet sich zwischen den Ästen und Zweigen sowie den übrigen Strukturen der Basisstruktur unausgehärtetes Herstellungsmaterial. Dieses Herstellungsmaterial sollte im weiteren Herstellungsprozess entfernt werden. Durch die offene dendritische Basisstruktur wird der technische Vorteil erreicht, dass das unausgehärtete, flüssige Herstellungsmaterial schnell aus den Zwischenräumen abfließen kann und sich die Herstellung des Dentalobjektes beschleunigt. Eine guter Materialfluss ist gekennzeichnet durch einen schnelleren Druckausgleich beim Trennen und Zustellen der Bauplattform über das hineinströmende oder herausgepresste Herstellungsmaterial entlang der polymerisierten Struktur.

In dem Herstellungsverfahren weist die dendritische Basisstruktur eine Hauptstruktur auf, von der aus sich Ausläufer nach außen erstrecken. Die Ausläufer können sich sternförmig nach Außen erstecken. Dadurch wird beispielsweise der technische Vorteil erreicht, dass eine gute Kraftverteilung in alle Richtungen erreicht wird.

In einer technisch vorteilhaften Ausführungsform des Herstellungsverfahrens liegt die Hauptstruktur der dendritischen Basisstruktur unter dem geometrischen Zentrum des Dentalobjekts. Dadurch wird beispielsweise der technische Vorteil erreicht, dass Kräfte vom Dentalobjekt gleichmäßig auf die Basisstruktur verteilt werden.

In einer weiteren technisch vorteilhaften Ausführungsform des Herstellungsverfahrens ist ein Zweig der dendritischen Basisstruktur mit einer geringeren Breite als ein Ast der dendritischen Basisstruktur gebildet. Dadurch wird beispielsweise der technische Vorteil erreicht, dass Kräfte mit geringem Materialaufwand in äußere Bereiche übertragen werden.

In einer weiteren technisch vorteilhaften Ausführungsform des Herstellungsverfahrens werden auf der Basisstruktur Unterstützungsstrukturen für das Dentalobjekt erzeugt. Dadurch wird beispielsweise der technische Vorteil erreicht, dass sich Kräfte vom Dentalobjekt auf die Basisstruktur effizient übertragen lassen.

In einer weiteren technisch vorteilhaften Ausführungsform des Herstellungsverfahrens ist zumindest eine Unterstützungsstruktur jenseits der dendritischen Basisstruktur gebildet. Dadurch wird beispielsweise der technische Vorteil erreicht, dass sich Dentalobjekte mit großer Spannweite mit geringem Materialaufwand erzeugen lassen.

In einer weiteren technisch vorteilhaften Ausführungsform des Herstellungsverfahrens ist die dendritische Basisstruktur spiegelsymmetrisch, rotationssymmetrisch, asymmetrisch. Eine asymmetrische Basisstruktur kann optimal an das Dentalobjekt angepasst werden. In der Regel führen frei geformte Dentalobjekte zu asymmetrischen Basisstrukturen. Dadurch wird beispielsweise der technische Vorteil erreicht, dass eine gleichmäßige Kraftübertragung erreicht wird.

In einer weiteren technisch vorteilhaften Ausführungsform des Herstellungsverfahrens ist die Hauptstruktur der dendritischen Basisstruktur unterhalb des Schwerpunkts des aufzubauenden Dentalobjekts angeordnet. Dadurch wird beispielsweise der technische Vorteil erreicht, dass sich das Dentalobjekt gleichmäßig abstützen lässt.

In einer weiteren technisch vorteilhaften Ausführungsform des Herstellungsverfahrens ist der Schwerpunkt des Dentalobjekts durch eine Unterstützungsstruktur an der Hauptstruktur der dendritischen Basisstruktur abgestützt. Dadurch wird beispielsweise der technische Vorteil erreicht, dass sich die Stabilität der Konstruktion weiter verbessert.

In einer weiteren technisch vorteilhaften Ausführungsform des Herstellungsverfahrens ist auf der dendritischen Basisstruktur eine dendritische Unterstützungsstruktur aufgebaut. Dadurch wird beispielsweise der technische Vorteil erreicht, dass die Unterstützungsstruktur Kräfte effizient auf die Basisstruktur übertragen kann.

In einer weiteren technisch vorteilhaften Ausführungsform des Herstellungsverfahrens ist eine lokale Breite der dendritischen Basisstruktur auf die lokal auftretenden Kräfte durch das Dentalobjekt ausgelegt. Dadurch wird beispielsweise der technische Vorteil erreicht, dass die dendritische Basisstruktur Kräfte mit geringem Materialeinsatz auf die Bauplattform übertragen kann.

In einer weiteren technisch vorteilhaften Ausführungsform des Herstellungsverfahrens ist die dendritische Basisstruktur in Schichten aufgebaut. Dadurch wird beispielsweise der technische Vorteil erreicht, dass sich die dendritische Basisstruktur auf einfache Weise in einer gewünschten Dicke herstellen lässt.

In einer weiteren technisch vorteilhaften Ausführungsform des Herstellungsverfahrens nimmt eine Höhe der dendritischen Basisstruktur zur Hauptstruktur der dendritischen Basisstruktur hin zu. Die am niedrigsten ausgeführten Teile der Basisstruktur weisen eine Höhe gemäß einer Anzahl an ausgehärteten Schichten auf. Eine Steigerung einer Höhe von außen nach innen kann beispielswese 3 (Zweig) zu 6 (Ast) zu 9 (Hauptstruktur) oder 3 (Zweig) zu 10 (Ast) zu 20 (Hauptstruktur) betragen. Dadurch wird beispielsweise der technische Vorteil erreicht, dass die mechanische Festigkeit der dendritischen Basisstruktur an die auftretenden Kräfte angepasst ist und ein Materialfluss weiter erleichtert wird.

In einer weiteren technisch vorteilhaften Ausführungsform des Herstellungsverfahrens werden mehrere dendritische Basisstrukturen auf der Bauplattform erzeugt. Dadurch wird beispielsweise der technische Vorteil erreicht, dass das Dentalobjekt über eine große Breite oder Spannweite abgestützt werden kann.

Gemäß einem zweiten Aspekt wird die technische Aufgabe durch eine dendritische Basisstruktur zum Aufbauen eines Dentalobjekts durch ein dreidimensionales Druckverfahren gelöst. Dadurch wird der gleiche technische Vorteil wie durch das Herstellungsverfahren nach dem ersten Aspekt gelöst.

Gemäß einem dritten Aspekt welcher nicht teil der Erfindung ist, wird ein Dentalobjekt durch ein Herstellungsverfahren nach dem ersten Aspekt hergestellt.

Ausführungsbeispiele der Beschreibung sind in den Zeichnungen dargestellt und werden im Folgenden näher beschrieben. Es zeigen:
- Fig. 1A und 1B: Aufsichten auf unterschiedliche dendritische Basisstrukturen;
- Fig. 2A und 2B: Aufsichten auf unterschiedliche dendritische Basisstrukturen;
- Fig. 3: eine perspektivische Ansicht auf ein Dentalobjekt, das auf der Basisstruktur aufgebaut worden ist;
- Fig. 4: eine Querschnittsansicht durch ein Dentalobjekt während der Herstellung;
- Fig. 5: weitere Querschnittsansichten durch ein schräges Dentalobjekt während der Herstellung;
- Fig. 6: eine Ansicht eines ringförmigen Dentalobjekts während der Herstellung; und
- Fig. 7: eine Querschnittsansicht durch ein gewinkeltes Dentalobjekt während der Herstellung;
- Fig. 8: ein zylindrisches Dentalobjekt mit einer dendritischen Basisstruktur; und
- Fig. 9: ein weiteres zylindrisches Dentalobjekt mit einer dendritischen Basisstruktur.

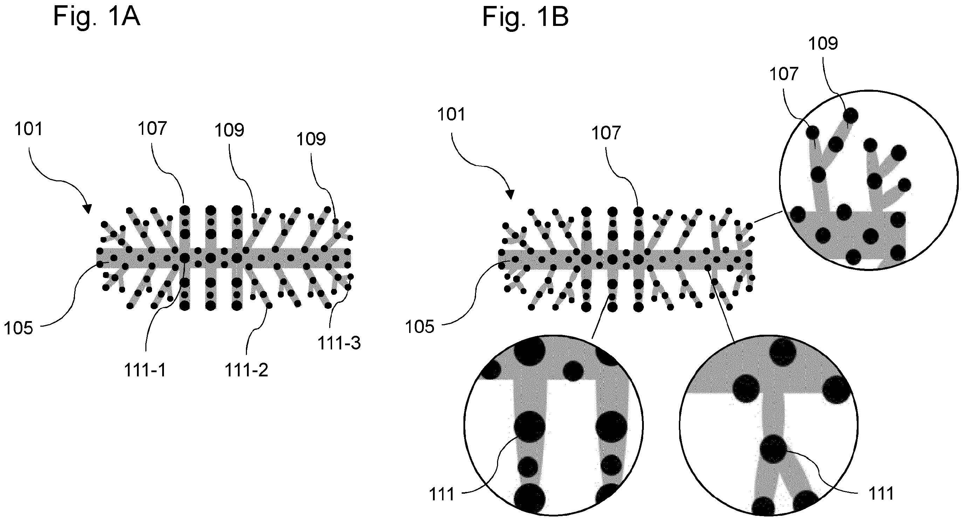

Fig. 1A und 1B zeigen Aufsichten auf unterschiedliche dendritische Basisstrukturen 101. Die dendritischen Basisstrukturen 101 werden durch die ersten Schichten eines Bauauftrags für ein dreidimensionales Dentalobjekt 100 in einem dreidimensionalen Druckverfahren erzeugt. Die dendritischen Basisstrukturen 101 können durch ein computergestütztes Berechnungsverfahren mit entsprechenden Berechnungsvorschriften auf einer Bauplattform 103 des Druckers erzeugt werden.

Eine dendritische Basisstruktur 101 weist eine flächige Hauptstruktur 105 auf, von der aus sich Ausläufer nach außen erstrecken. Der gegenseitige Abstand der Ausläufer kann nach außen hin zunehmen. Die Breite der Ausläufer nimmt nach außen hin ab.

Die dendritische Basisstruktur 101 kann Äste 107 als Ausläufer und Zweige 109 als weitere Ausläufer umfassen. Dabei zweigt ein Zweig 109 von einem Ast 107 ab. Dieser Zweig 109 kann dann wiederum einen neuen Ast für einen weiteren Zweig bilden. Fig. 1A zeigt eine Basisstruktur 101 mit Ästen 107 und Zweigen 109. Auf dieser Basisstruktur 101 sind Unterstützungsstrukturen 111-1, 111-2 und 111-3 mit einer Geometrie entsprechend der kraftübertragenden Funktion angeordnet. Die Unterstützungsstrukturen 111-1, 111-2 und 111-3 stützen das Dentalobjekt 100 auf der Basisstruktur 101 ab. Dazu stellen diese eine mechanische Verbindung zwischen der Basisstruktur 101 und dem Dentalobjekt 100 her. Die Unterstützungsstrukturen 111-1, 111-2 und 111-3 können an dem Dentalobjekt 100 mit halbkugelförmigen oder zylinderförmigen Strukturen (Support Heads) befestigt sein.

Fig. 1B zeigt eine Ausführungsform mit geometrisch reduzierter Basisstruktur 101. Die Ausläufer können die Basis von zwei oder mehr Unterstützungsstrukturen 111-1, 111-2 und 111-3 verbinden oder den kürzesten Weg zu benachbarten Dendriten überbrücken.

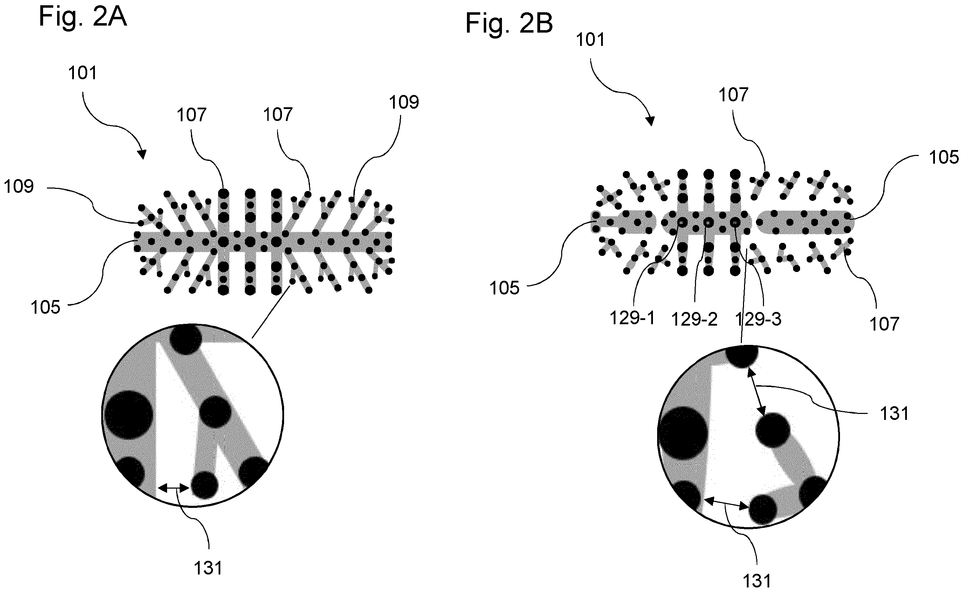

Fig. 2A und 2B zeigen weitere Aufsichten auf unterschiedliche dendritische Basisstrukturen 101. Fig. 2A zeigt eine zwischen zwei Ausläufern bestehende Engstelle 131. Durch diese Engstelle 131 kann das nichtausgehärtete Herstellungsmaterial lediglich mit gehemmtem Materialfluss fließen. Fig. 2B zeigt eine optimierte Basisstruktur 101. Die Punkte 129-1, 129-2 und 129-3 sind das Zentrum der Basisstruktur 101 zu unterschiedlichen Zeiten. Die Basisstruktur 101 ist selektiv geöffnet und folgt einer Projektion der Linie der schichtspezifischen Flächenschwerpunkte. Die Multizentren der Basisstruktur 101 weisen eine jeweils geeignete Wandstärke auf.

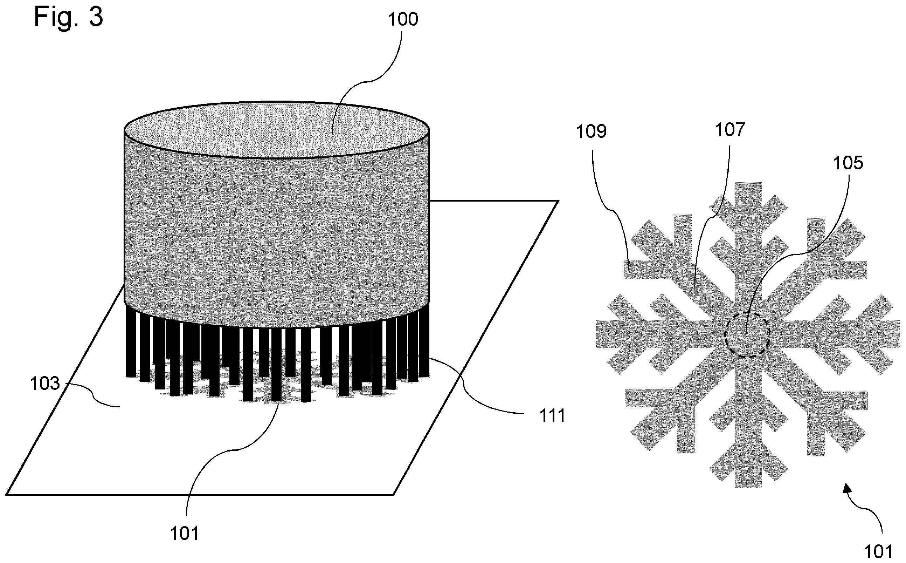

Fig. 3 zeigt eine perspektivische Ansicht auf das Dentalobjekt 100, das auf der dendritischen Basisstruktur 101 aufgebaut ist. Das Dentalobjekt 100 ist beispielsweise eine Krone, eine Brücke, ein Veneer, ein Abutment, ein Inlay, ein Onlay, eine Schiene oder eine Teil- oder Vollprothese. Im Allgemeinen kann das Dentalobjekt 100 jedes Objekt im Dentalbereich sein, das im Rahmen eines dreidimensionalen Druckverfahrens hergestellt werden soll.

Bei der Herstellung des Dentalobjektes 100 wird zunächst die dendritische Basisstruktur 101 schichtweise auf der ebenen Bauplattform 103 des Druckers aufgebaut. Bei einer Anzahl von beispielsweise zehn Schichten mit einer Höhe von 50 um entsteht insgesamt eine dendritische Basisstruktur 101 mit einer Höhe von 500 um, bevor ein freier Materialfluss des flüssigen Herstellungsmaterials durch die übergeordneten Unterstützungsstrukturen (Supportstrukturen) 111 stattfinden kann.

Die dendritische Basisstruktur 101 dient zur Übertragung von Kräften während der Herstellung auf die Bauplattform 103. Die dendritische Basisstruktur 101 haftet an der Bauplattform 103 und stützt das Dentalobjekt 100 während dem Druckverfahren ab. Die dendritische Basisstruktur 101 ist als Haftfläche an der Bauplattform 103 genau so groß dimensioniert, dass diese den Kräften des Druckauftrags standhält, aber das flüssige Herstellungsmaterialdabei mit minimalen Gegenkräften aus der Basisstruktur 101 ableitet.

Nachdem die dendritische Basisstruktur 101 auf der Bauplattform 103 hergestellt worden ist, werden auf dieser schichtweise die säulenförmigen oder pfostenförmigen Unterstützungsstrukturen 111 für das Dentalobjekt 100 hergestellt. Im Allgemeinen dienen die Unterstützungsstrukturen 111 der weiteren Kraftübertragung und Versteifung. Diese folgen den Regeln der prozess- und materialabhängigen Baumöglichkeiten, wie z.B. einem Abstand zum Überspannen von Freiflächen oder zur Unterstützung von räumlichen Minima.

Die Unterstützungsstrukturen 111 stützen das herzustellende Dentalobjekt 100 an der dendritischen Basisstruktur 101 ab und übertragen auftretende Kräfte von dem Dentalobjekt 100 auf die dendritische Basisstruktur 101. Die an die Basisstruktur 101 anbindenden Unterstützungsstrukturen 111 sind beispielsweise an Stellen zur Unterstützung von lokalen Minima des Dentalobjekts 100 vorgesehen. Auf den säulenförmigen Unterstützungsstrukturen 111 wird anschließend das Dentalobjekt 100 schichtweise durch das Druckverfahren erzeugt.

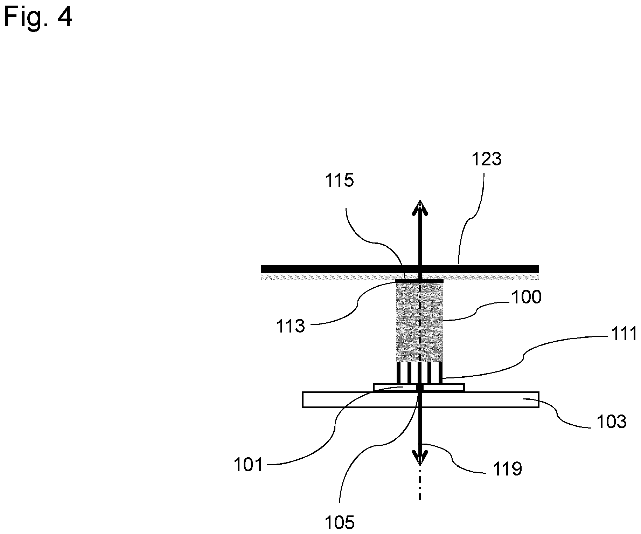

Fig. 4 zeigt eine Querschnittsansicht durch ein Dentalobjekt 100 während der Herstellung. Der Winkel der Schwerpunktlinie steht senkrecht zur Bauplattform 103. Aufgrund der Trennbewegung der Belichtungsebene 123 entlang der vertikalen Achse 119 in Pfeilrichtung ist auch die dendritische Basisstruktur 101 in dieser Richtung symmetrisch.

Die gesamte Struktur einschließlich der dendritischen Basisstruktur 101, den Unterstützungsstrukturen 111 und dem Dentalobjekt 100 wird in einem Stereolithografieverfahren aufgebaut, bei dem das Herstellungsmaterial schichtweise durch projizierte Lichtmuster in einer Belichtungsebene 123 ausgehärtet wird.

Nach jedem Schritt des Aushärtens einer Schicht 113 wird die Belichtungsebene 123 in einer Trennbewegung getrennt und ein Stück verschoben, so dass erneut flüssiges Herstellungsmaterial eindringen und in der nächsten Schicht 113 an der Belichtungsebene 123 ausgehärtet werden kann. Dabei entsteht eine Trennebene 115, in der sich das aufgebaute Dentalobjekt 100 von der Belichtungsebene 123 löst. In der ersten Bauphase werden die Trennkräfte hauptsächlich durch die Nähe der Bauplattform 103 zu der Belichtungsebene 123 dominiert.

In der Fig. 4 wird das Dentalobjekt 100 schichtweise von unten nach oben aufgebaut. Die Belichtungsebene 123 ist daher an der Oberseite des Dentalobjekts 100 angeordnet und wir schrittweise nach oben verschoben (Bottom-Up). Allerdings kann das Verfahren auch in umgekehrter Orientierung ausgeführt werden, so dass das Dentalobjekt 100 schichtweise von oben nach aufgebaut wird. Die Belichtungsebene 123 ist in diesem Fall an der Unterseite des Dentalobjekts 100 angeordnet und wir schrittweise nach oben verschoben (Top-Down).

Die Trennkräfte zwischen Belichtungsebene 123 und der ausgehärteten Schicht 113 sind umso geringer, je kleiner die Belichtungsfläche ist und je leichter ein freier Fluss des flüssigen Herstellungsmaterial möglich ist. Gleiches gilt für den Zustellprozess, bei dem eine geringe Querschnittsfläche eine geringe Gegenkraft erzeugt. Eine günstige Geometrie des Dentalobjekts 100 erzeugt einen geringeren Fließwiderstand des flüssigen Herstellungsmaterials, das verdrängt wird, um die spezifische Fläche in die vorgesehene Position zu bringen. Innerhalb der ersten Schichten 113 korrelieren die Trennkräfte mit der Größe der vollflächigen Bauplattform 103, die keine druckabbauenden Kanäle oder Strukturen aufweist.

Die dendritische Basisstruktur 101 muss nicht alle Unterstützungsstrukturen 111 mit dem Dentalobjekt 100 verbinden. Einzelne Unterstützungsstrukturen 111 können auch frei neben der dendritischen Basisstruktur 101 angeordnet und mit der Bauplattform 103 verbunden sein. Diese sind vollständig von flüssigem Herstellungsmaterial umgeben, wenn es aus Gründen der geometrischen Verhältnisse des herzustellenden Dentalobjektes 100 vorteilhaft ist.

Die dendritische Basisstruktur 101, die durch breite Abstände der der Äste 107 und Zweige 109 zueinander gekennzeichnet ist, begünstigt einen ausreichenden Fluss des nicht ausgehärteten Herstellungsmaterials. Nach einem Aushärten befindet sich zwischen den Ästen 107 und Zweigen 109 sowie den übrigen Strukturen flüssiges Herstellungsmaterial, das nicht ausgehärtet worden ist. Dieses Herstellungsmaterial sollte im weiteren Herstellungsprozess entfernt werden. Durch die offene dendritische Basisstruktur wird der technische Vorteil erreicht, dass das unausgehärtete, flüssige Herstellungsmaterial schnell aus den Zwischenräumen abfließen kann. Dadurch wird der Herstellungsprozess verbessert.

Zudem wird ein kurzer Fließweg des flüssigen Herstellungsmaterials in die Umgebung des vorgesehenen Belichtungsbereiches in der Belichtungsebene 123 erreicht. Die lokale Breite oder Höhe der Äste 107 und Zweige 109 der dendritischen Basisstruktur 101 ist auf die lokal zu erwartenden Kräfte ausgelegt, die je nach Trennposition auf der Bauplattform 103 und im Verhältnis zu anderen Dentalobjekten 100, der Schwerpunkte oder Schwerpunktverschiebungen der Dentalobjekte 100 variieren.

Die dendritische Basisstruktur 101 weist eine Hauptstruktur 105, wie beispielsweise ein Zentrum, auf, von dem aus die sternförmigen Äste 107 nach außen laufen. Die Anzahl an Ästen 107 und Zweigen 109 der Basisstruktur 101 ist dabei von Unterstützungsstruktur abhängig, die auf der Geometrie des Dentalobjektes beruht.

Die Hauptstruktur 105 der dendritischen Basisstruktur 101 kann im geometrischen Zentrum der gebildeten Unterstützungsstruktur 111 liegen. Die Längen der Äste 107 und Zweige 109 der dendritischen Basisstruktur 101 passen sich in diesem Fall entsprechend an. Dies gilt beispielsweise für Dentalobjekte 100 mit großer Spannweite, deren Massenschwerpunkt außerhalb des Dentalobjektes 100 liegt, wie beispielsweise ringförmige oder hufeisenförmige Dentalobjekte 100.

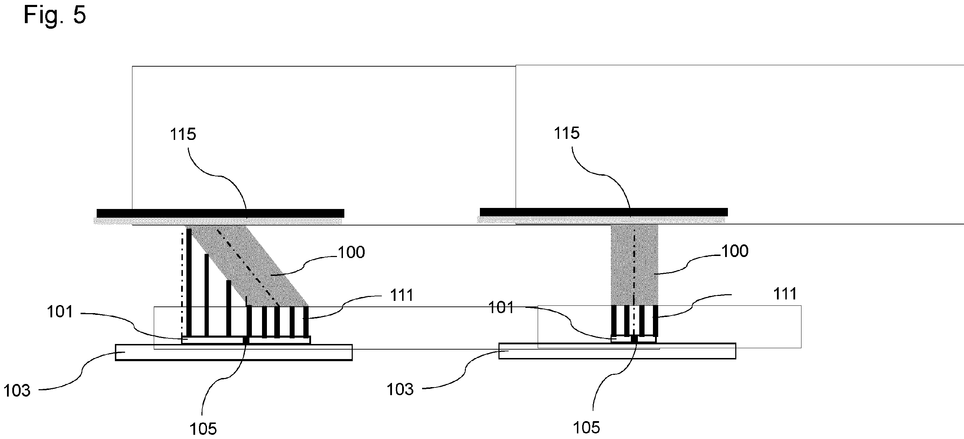

Fig. 5 zeigt eine weitere Querschnittsansicht durch ein schräges Dentalobjekt 100 während der Herstellung in zwei Orientierungen. Da das herzustellende Dentalobjekt 100 in der Projektion auf die Bauplattform 103 in vertikaler Richtung nicht symmetrisch ist, findet bei der schichtweisen Herstellung des Dentalobjekts 100 mit jeder hinzukommenden Schicht 113 eine Schwerpunktverschiebung statt.

Die Hauptstruktur 105 der Basisstruktur 101 kann dieser Schwerpunktverschiebung folgen, so dass während des Aufbaus des Dentalobjekts 100 für jeden neu entstehenden Schwerpunkt in vertikaler Richtung eine entsprechende Haftfläche oder ein Haltepunkt an der Bauplattform 103 existiert. Die Richtung der Hauptstruktur 105 ergibt sich aus der Summe aller Schwerpunkte der jeweiligen Einzelschichten.

In einer ersten Ausführungsform des Dentalobjektes (links) verlängert sich die Hauptstruktur 105 der dendritischen Basisstruktur 101 in horizontaler Richtung. Die Länge der Hauptstruktur 105 berechnet sich dabei aus dem Kraftvektor, der unter den gegebenen aktuellen Trennbedingungen an der Schnittstelle angreift. Ändert sich der angreifende Kraftvektor am Kraftangriffspunkt innerhalb des Trennprozesses, ändert dies auch die Länge der Hauptstruktur 105.

Die Kraftübertragung zwischen dem Dentalobjekt 100 und der dendritischen Basisstruktur 101 übernehmen die Unterstützungsstrukturen 111. Die Auslegung der Unterstützungsstrukturen 111 folgt den gleichen Regeln, so dass alle Unterstützungsstrukturen 111 als Einzelobjekt gegen Kraftangriffe unterstützt werden.

In der einer zweiten Ausführungsform des Dentalobjekts (rechts) ist das Dentalobjekt 100 in vertikaler Richtung symmetrisch aufgebaut. In diesem Fall kann das Dentalobjekt 100 auf einer dendritischen Basisstruktur aufgebaut werden, die sich unterhalb des Dentalobjekts 100 erstreckt.

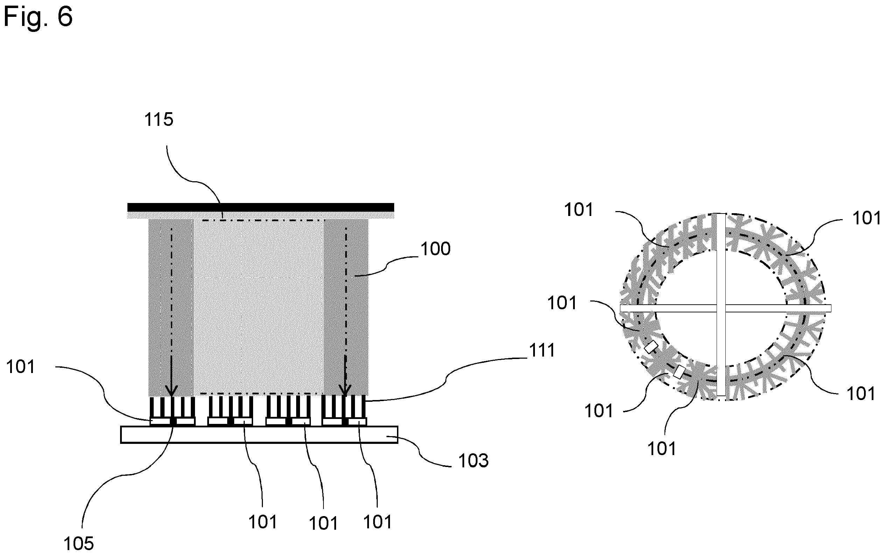

Fig. 6 zeigt eine weitere Ansicht eines ringförmigen Dentalobjekt 100 mit mehreren dendritischen Basisstrukturen 101 während der Herstellung. Die dendritischen Basisstrukturen 101 sind entlang der unteren Ringfläche des Dentalobjekts 100 angeordnet und sind in verschiedenen Ausführungsformen der dendritartigen Verzweigungen ausgebildet. Die dendritische Basisstruktur 101 ist für die Geometrie des Dentalobjektes 100 in mehrere Basisstrukturen 101 unterteilt.

Das Dentalobjekt 100 kann in eine Mehrzahl von Segmenten unterteilt werden, beispielsweise 360 Segmente, die sich durch eine Ebenenschar um den Normalenvektor in z-Richtung des Massenschwerpunktes des Dentalobjektes 100 ergeben. Die Hauptstrukturen 105 ergeben sich aus der Summe aller Schwerpunkte der Einzelsegmente - vergleichbar der neutralen Faser des Dentalobjektes 100. Die Nebenstrahlen folgen der Schwerpunktverschiebung des Dentalobjektes oder Dentalobjektsegmentes. Derartige ringförmige Dentalobjekte 100 weisen eine unterbrochene Hauptstruktur 105 auf.

Es kann auch mehrere Hauptstrukturen 105 geben, wenn es für die zu herzustellende Dentalobjekt 100 die effektivste Anbindung darstellt, beispielsweise bei einem knochenförmigen Dentalobjekt 100 mit jeweils einer Hauptstruktur 105 an den beiden Enden. Dadurch kann der Materialfluss weiter erhöht werden, da durch die die Unterteilung mir mehreren Hauptstrukturen 105 bereitere Kanäle gebildet werden, die den Materialfluss erleichtern.

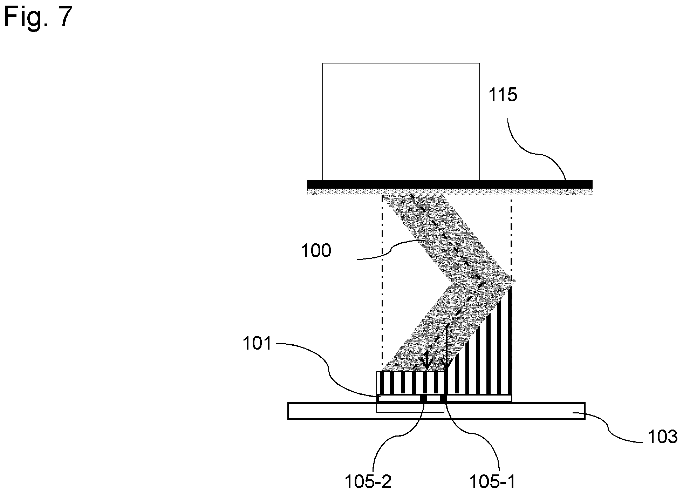

Fig. 7 zeigt eine Querschnittsansicht durch ein gewinkeltes Dentalobjekt 100 während der Herstellung. Durch den seitlich versetzen Aufbau entsteht ein Dentalobjekt 100 mit einem Schwerpunkt, der sich über die Höhe verändert. Auch wenn eine offene Struktur mit einer ausreichenden Breite vorliegt, so beträgt die Höhe einer Druckausgleichsöffnung in dieser frühen Phase des Druckverfahrens nur einen Bruchteil der Breite.

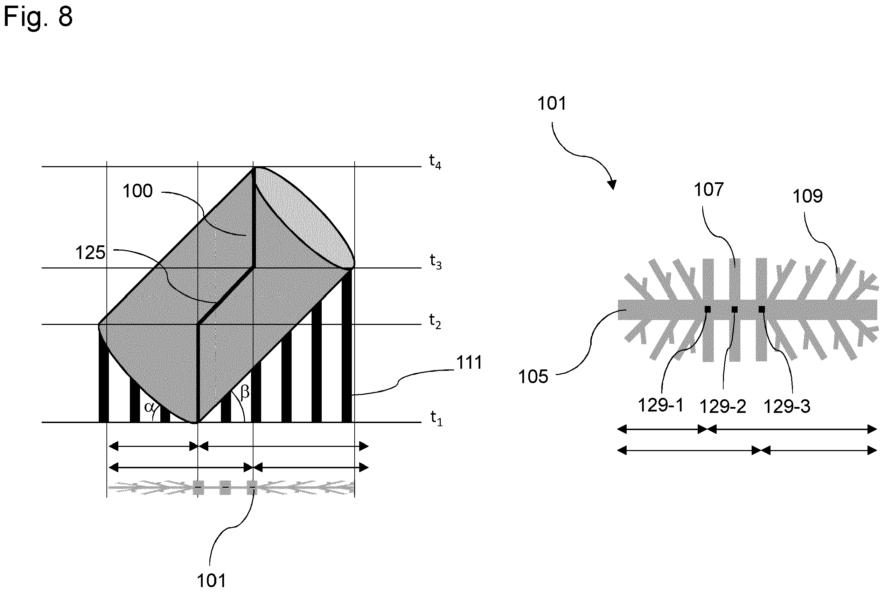

Fig. 8 zeigt ein zylindrisches Dentalobjekt 100 mit einer dendritischen Basisstruktur 101 in nicht z-symmetrischer Orientierung. Die Winkel α und β sind die lokalen Winkel der Objektoberfläche zur Basisebene. Die Linie 125 stellt die Summe aller schichtspezifischen Flächenschwerpunkte dar. Die Zeitpunkte t₁, t₂, t₃ und t₄ sind aufeinanderfolgende Zeitpunkte innerhalb des schichtweisen Aufbaus im Bauprozess. Zum Zeitpunkt t₁, t₂ ist der Punkt 129-1 das Zentrum der Basisstruktur 101, zum Zeitpunkt t₂ < t < t₃ ist der Punkt 129-2 das Zentrum der Basisstruktur 101 und zum Zeitpunkt t₃, t₄ ist der Punkt 129-3 das Zentrum der Basisstruktur 101.

Der Neigungswinkel der Rotationsachse des Dentalobjektes 100 beträgt 45° zur Bauplattform 103. Der Neigungswinkel einer Fläche oder Teilfläche im Verhältnis zur Ebene der Bauplattform 103 entscheidet, ob die Basisstruktur 101 an der entsprechenden Stelle selbsttragend ist oder durch eine Unterstützungsstruktur 111 unterstützt wird. Liegt beispielsweise der Winkel unter einem Selbstunterstützungswinkel (Self Supporting Angle) werden Unterstützungsstrukturen 111 gesetzt und über die Basisstruktur 101 mit der Bauplattform 103 verbunden.

Zur additiven Fertigung werden Schichtinformationen verwendet. Jede Einzelschicht besitzt einen Flächenschwerpunkt. Beim dreidimensionalen Aufbau gibt es zu jedem Zeitpunkt t des Bauprozesses einen Ort des gegenwärtigen Flächenschwerpunktes. Die Summe aller schichtspezifischen Flächenschwerpunkte ergibt eine Linie 125 innerhalb des Dentalobjektes 100.

Je nach Dentalobjekt 100 kann die Linie 125 des Flächenschwerpunktes innerhalb des Objektes liegen, wie beispielsweise bei einem Zylinder. Die Linie 125 kann auch teilweise außerhalb des Dentalobjektes 100 liegen, wie beispielsweise bei einem zylindrischen Ring, der auf der Bauplattform 103 liegt. Die Linie 125 kann aber auch vollständig innerhalb des Dentalobjektes 100 liegen, wie beispielsweise bei einem zylindrischen Ring, der auf der Bauplattform 103 steht.

Die Basisstruktur 101 umfasst mindestens eine Hauptstruktur 105. Objektspezifisch werden weitere Äste 107 oder Zweige 109 erzeugt. Die Hauptstruktur 105 umfasst dabei einen Bereich der zweidimensionalen Projektion der schichtspezifischen Flächenschwerpunktlinie auf die Ebene der Bauplattform 103. Die Äste 107 oder Zweige 109 unterstützen die von der Basisstruktur 101 ausgehenden Hauptachsen unter Berücksichtigung der Anforderungen an eine Haftfläche und ein Fließverhalten.

Bevorzugt werden Bereiche der ersten oder jeweils ersten Objektflächen, d.h. lokale Minima, unterstützt.

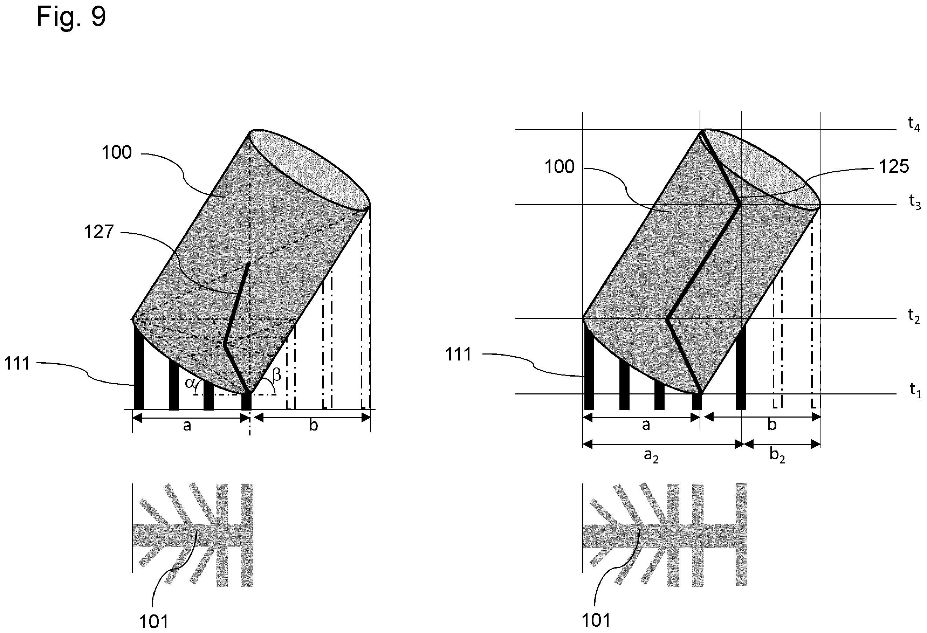

Fig. 9 zeigt ein zylindrisches Dentalobjekt mit einer dendritischen Basisstruktur 101 mit nicht z-symmetrischer Orientierung. Die Linie 127 stellt den Pfad des resultierenden Volumenschwerpunktes über den schichtweisen Aufbau dar.

Der Neigungswinkel der Rotationsachse des Dentalobjektes 100 unterscheidet sich von 45° zur Bauplattform 103. Der Winkel α der einen Seite des Dentalobjektes 100 liegt unter dem Selbstunterstützungswinkel und der Winkel β liegt über dem Selbstunterstützungswinkel. Daher werden auf der linken Seite Unterstützungsstrukturen 111 erzeugt, während auf der rechten Seite keine Unterstützungsstrukturen 111 erforderlich sind. Die daraus entstehende Basisstruktur 101 orientiert sich an der Projektion der Linie der Volumenschwerpunkte 127.

Ähnlich zum Verlauf der Linie 125 aller Flächenschwerpunkte kann auch die Linie 127 des Volumenschwerpunktes innerhalb oder außerhalb des Dentalobjektes 100 liegen. Der Flächenschwerpunkt kann stets innerhalb des Dentalobjektes 100 liegen und der Volumenschwerpunkt kann stets außerhalb des Dentalobjektes 100 liegen, beispielsweise bei einer Spirale, die auf der Bauplattform 103 steht. Zur Erzeugung einer optimierten Basisstruktur 101 können alle Geometrieinformationen verwendet werden.

Zum Zeitpunkt t₃ kann die Projektion des Flächenschwerpunktes außerhalb der Basisstruktur 101 liegen (Fig. 9 - rechts). Die Basisstruktur 101 wird um den Weg a₂ - a verlängert, um das Kräftemoment auf die Haftfläche zu verringern, das durch die geometriebedingte Schwerpunktverschiebung verursacht wird.

Der Schutzbereich der vorliegenden Erfindung ist durch die Ansprüche gegeben

### BEZUGSZEICHENLISTE

- 100: Dentalobjekt
- 101: dendritische Basisstruktur
- 103: Bauplattform
- 105: Hauptstruktur
- 107: Ast
- 109: Zweig
- 111: Unterstützungsstruktur
- 113: Schichten
- 115: Trennebene
- 117: Scherkraft
- 119: vertikale Achse
- 121: horizontale Bewegung
- 123: Belichtungsebene
- 125: Linie der Flächenschwerpunkte
- 127: Linie der Volumenschwerpunkte
- 129: Punkt
- 131: Engstelle

## Patentansprüche

1. Herstellungsverfahren für ein Dentalobjekt (100), mit den Schritten:
- Erzeugen einer flächigen dendritischen Basisstruktur (101) auf einer Bauplattform (103), wobei die dendritische Basisstruktur (101) eine Hauptstruktur (105) aufweist, von der aus sich Ausläufer (109, 107) nach außen erstrecken, wobei die Breite der Ausläufer nach außen hin abnimmt; und
- Aufbauen des Dentalobjekts (100) auf der dendritischen Basisstruktur (101) durch ein dreidimensionales Druckverfahren.

2. Herstellungsverfahren nach Anspruch 1, wobei das Hauptstruktur (105) der dendritischen Basisstruktur (101) unter dem geometrischen Zentrum des Dentalobjekts (100) liegt.

3. Herstellungsverfahren nach einem der vorangehenden Ansprüche, wobei ein Zweig (109) der dendritischen Basisstruktur (101) mit einer geringeren Breite als ein Ast (107) der dendritischen Basisstruktur (101) gebildet ist.

4. Herstellungsverfahren nach einem der vorangehenden Ansprüche, wobei auf der Basisstruktur (101) Unterstützungsstrukturen (111) für das Dentalobjekt (100) erzeugt werden.

5. Herstellungsverfahren nach einem der vorangehenden Ansprüche, wobei zumindest eine Unterstützungsstruktur (111) jenseits der dendritischen Basisstruktur (101) gebildet ist.

6. Herstellungsverfahren nach einem der vorangehenden Ansprüche, wobei die dendritische Basisstruktur (101) spiegelsymmetrisch, rotationssymmetrisch oder asymmetrisch ist.

7. Herstellungsverfahren nach einem der vorangehenden Ansprüche, wobei die Hauptstruktur (105) der dendritischen Basisstruktur (101) unterhalb des Schwerpunkts des aufzubauenden Dentalobjekts (100) angeordnet ist.

8. Herstellungsverfahren nach Anspruch 7, wobei der Schwerpunkt des Dentalobjekts (100) durch eine Unterstützungsstruktur (111) an der Hauptstruktur (105) der dendritischen Basisstruktur (101) abgestützt ist.

9. Herstellungsverfahren nach einem der vorangehenden Ansprüche, wobei auf der dendritischen Basisstruktur (101) eine dendritische Unterstützungsstruktur (111) aufgebaut ist.

10. Herstellungsverfahren nach einem der vorangehenden Ansprüche, wobei eine lokale Breite der dendritischen Basisstruktur (101) auf die lokal auftretenden Kräfte durch das Dentalobjekt (100) ausgelegt ist.

11. Herstellungsverfahren nach einem der vorangehenden Ansprüche, wobei die dendritische Basisstruktur (101) in Schichten (113) aufgebaut ist.

12. Herstellungsverfahren nach einem der vorangehenden Ansprüche, wobei eine Höhe der dendritischen Basisstruktur (101) zur Hauptstruktur (105) der dendritischen Basisstruktur (101) hin zunimmt.

13. Flächige dentritische Basisstruktur (101) zum Aufbauen eines Dentalobjekts (100) durch ein dreidimensionales Druckverfahren,
wobei die dendritische Basisstruktur (101) eine Hauptstruktur (105) aufweist, von der aus sich Ausläufer (109, 107) nach außen erstrecken und wobei die Breite der Ausläufer nach außen hin abnimmt.

## Claims

1. A manufacturing method for a dental object (100), comprising the steps of:
- creating a flat dendritic base structure (101) on a build platform (103), wherein the dendritic base structure (101) comprises a main structure (105) from which extensions (109, 107) extend outwards, wherein the widths of the extensions decrease towards the outside; and
- building the dental object (100) on the dendritic base structure (101) by a three-dimensional printing process.

2. The manufacturing method according to claim 1, wherein the main structure (105) of the dendritic base structure (101) is located below the geometric center of the dental object (100).

3. The manufacturing method according to any one of the preceding claims, wherein a twig (109) of the dendritic base structure (101) is formed with a smaller width than a branch (107) of the dendritic base structure (101).

4. The manufacturing method according to any one of the preceding claims, wherein support structures (111) for the dental object (100) are created on the base structure (101) .

5. The manufacturing method according to any one of the preceding claims, wherein at least one support structure (111) is formed beyond the dendritic base structure (101) .

6. The manufacturing method according to any one of the preceding claims, wherein the dendritic base structure (101) is mirror symmetric, rotationally symmetric or asymmetric.

7. The manufacturing method according to any one of the preceding claims, wherein the main structure (105) of the dendritic base structure (101) is arranged below the center of gravity of the dental object (100) to be built.

8. The manufacturing method according to claim 7, wherein the center of gravity of the dental object (100) is supported by a support structure (111) on the main structure (105) of the dendritic base structure (101).

9. The manufacturing method according to any one of the preceding claims, wherein a dendritic support structure (111) is built on the dendritic base structure (101).

10. The manufacturing method according to any one of the preceding claims, wherein a local width of the dendritic base structure (101) is adapted to the locally occurring forces by the dental object (100).

11. The manufacturing method according to any one of the preceding claims, wherein the dendritic base structure (101) is built up in layers (113).

12. The manufacturing method according to any one of the preceding claims, wherein a height of the dendritic base structure (101) increases toward the main structure (105) of the dendritic base structure (101).

13. A flat dendritic base structure (101) for building a dental object (100) by a three-dimensional printing process, wherein the dendritic base structure (101) comprises a main structure (105) from which extensions (109, 107) extend outwards and wherein the widths of the extensions decrease towards the outside.

## Revendications

1. Procédé de fabrication d'un objet dentaire (100), comprenant les étapes suivantes :
- création d'une structure de base dendritique plane (101) sur une plate-forme de construction (103), la structure de base dendritique (101) présentant une structure principale (105) à partir de laquelle s'étendent des branches (109, 107) vers l'extérieur, où la largeur des branches diminue vers l'extérieur ; et
- construction de l'objet dentaire (100) sur la structure de base dendritique (101) par un procédé d'impression tridimensionnel.

2. Procédé de fabrication selon la revendication 1, où la structure principale (105) de la structure de base dendritique (101) est située sous le centre géométrique de l'objet dentaire (100).

3. Procédé de fabrication selon l'une des revendications précédentes, où une branche (109) de la structure de base dendritique (101) est formée avec une largeur inférieure à une branche (107) de la structure de base dendritique (101).

4. Procédé de fabrication selon l'une des revendications précédentes, où des structures de support (111) pour l'objet dentaire (100) sont générées sur la structure de base (101).

5. Procédé de fabrication selon l'une des revendications précédentes, où au moins une structure de support (111) est formée au-delà de la structure de base dendritique (101) .

6. Procédé de fabrication selon l'une des revendications précédentes, où la structure de base dendritique (101) présente une symétrie spéculaire, une symétrie de révolution ou une asymétrie.

7. Procédé de fabrication selon l'une des revendications précédentes, où la structure principale (105) de la structure dendritique de base (101) est disposée en dessous du centre de gravité de l'objet dentaire (100) à construire.

8. Procédé de fabrication selon la revendication 7, où le centre de gravité de l'objet dentaire (100) est supporté par une structure de support (111) sur la structure principale (105) de la structure de base dendritique (101) .

9. Procédé de fabrication selon l'une des revendications précédentes, où une structure de support dendritique (111) est construite sur la structure de base dendritique (101).

10. Procédé de fabrication selon l'une des revendications précédentes, où une largeur locale de la structure de base dendritique (101) est conçue pour les forces exercées localement par l'objet dentaire (100).

11. Procédé de fabrication selon l'une des revendications précédentes, où la structure de base dendritique (101) est constituée en couches (113).

12. Procédé de fabrication selon l'une des revendications précédentes, où une hauteur de la structure dendritique de base (101) augmente en direction de la structure principale (105) de la structure dendritique de base (101) .

13. Structure de base dendritique plane (101) pour la construction d'un objet dentaire (100) par un procédé d'impression tridimensionnel, où la structure de base dendritique (101) présente une structure principale (105) à partir de laquelle s'étendent des extensions (109, 107) vers l'extérieur et où la largeur des extensions diminue vers l'extérieur.
